# DEMANDE DE BREVET EUROPEEN

(11) **EP 3 225 877 A1**
(43) Date de publication de la demande: **04.10.2017**
(21) Numéro de dépôt: 17161240.1
(22) Date de dépôt: 16.03.2017
(51) Int. Cl.: F16F 15/14

(54) **SUPPORT POUR DISPOSITIF D'AMORTISSEMENT PENDULAIRE ET DISPOSITIF D'AMORTISSEMENT PENDULAIRE COMPRENANT UN TEL SUPPORT**

(30) Priorité: 21.03.2016 FR 1652377
(71) Demandeur: Valeo Embrayages, 80009 Amiens Cedex 2 (FR)
(72) Inventeur: HENNEBELLE, Michaël, 80000 AMIENS (FR); GRIECO, Giovanni, 92700 COLOMBES (FR); VERHOOG, Roel, 60190 GOURNAY SUR ARONDE (FR); SALVADORI, David, 60530 LE MESNIL EN THELLE (FR)
(74) Mandataire: Cardon, Nicolas

(57) **Abrégé**

Support (4) pour dispositif d'amortissement pendulaire (2), comprenant :
- une première partie (7) apte à être reliée à un composant (1) d'un système de transmission de véhicule automobile, et
- une deuxième partie (8) dans laquelle est ménagée au moins une première piste de roulement apte à coopérer avec un organe de roulement (21) pour guider le déplacement d'un corps pendulaire (5),
la première partie (7) et la deuxième partie (8) étant rigidement reliées entre elles et la première partie (7) étant obtenue par découpage de la zone centrale de la deuxième partie (8).

## Description

La présente invention concerne un dispositif d'amortissement pendulaire, notamment pour un système de transmission de véhicule automobile.

Dans une telle application, le dispositif d'amortissement pendulaire peut être intégré à un système d'amortissement de torsion d'un embrayage apte à relier sélectivement le moteur thermique à la boîte de vitesses, afin de filtrer les vibrations dues aux acyclismes du moteur. Un tel système d'amortissement de torsion est par exemple un double volant amortisseur.

En variante, dans une telle application, le dispositif d'amortissement pendulaire peut être intégré à un disque de friction de l'embrayage ou à un convertisseur de couple hydrodynamique ou à un volant solidaire du vilebrequin ou à un double embrayage à sec ou humide.

Un tel dispositif d'amortissement pendulaire met classiquement en oeuvre un support et un ou plusieurs corps pendulaires mobiles par rapport à ce support, le déplacement par rapport au support de chaque corps pendulaire étant guidé par deux organes de roulement coopérant d'une part avec des pistes de roulement solidaires du support, et d'autre part avec des pistes de roulement solidaires du corps pendulaire.

Le support du dispositif d'amortissement pendulaire doit généralement :
- d'une part assurer la connexion physique du dispositif d'amortissement pendulaire au reste du système de transmission, et
- d'autre part être suffisamment robuste pour guider le déplacement des corps pendulaires tout en résistant aux chocs exercés sur lui en fonctionnement par ces corps pendulaires.

Il est connu, pour répondre à cette double contrainte, d'avoir recours à un support en deux parties distinctes, l'une de ces parties du support étant spécifique à la connexion physique au reste du système de transmission, et l'autre de ces parties du support étant spécifique au guidage du déplacement des corps pendulaires. Un tel support est néanmoins coûteux à réaliser.

Il existe un besoin pour tenir compte de la double contrainte mentionnée ci-dessus d'une façon simple et peu coûteuse.

L'invention a pour but de répondre à ce besoin et elle y parvient, selon l'un de ses aspects, à l'aide d'un support pour dispositif d'amortissement pendulaire, comprenant :
- une première partie apte à être reliée à un composant d'un système de transmission de véhicule automobile, et
- une deuxième partie dans laquelle est ménagée au moins une première piste de roulement apte à coopérer avec un organe de roulement pour guider le déplacement d'un corps pendulaire,
la première partie et la deuxième partie étant rigidement reliées entre elles et la première partie étant obtenue par découpage de la zone centrale de la deuxième partie.

Selon l'invention, la première partie et la deuxième partie du support sont réalisées à partir d'une seule et même pièce, par exemple une tôle en acier. En conséquence, il n'est pas nécessaire d'avoir recours à deux pièces de départ distinctes pour réaliser le support. Les chutes de la deuxième partie forment alors la première partie du support.

La séparation en deux parties de la pièce de départ permet d'adapter ensuite chaque partie du support à la contrainte que cette partie doit permettre de tenir, avant couplage rigide entre ces deux parties. On fait par exemple subir à la deuxième partie, après découpage, un traitement de durcissement afin d'augmenter sa robustesse. Ce traitement est par exemple un traitement thermique permettant un apport de carbone pour durcir la deuxième partie du support. L'apport de carbone se fait par exemple par carbonitruration ou nitruration. Ce traitement de durcissement n'affecte alors pas la première partie du support qui a été séparée de la deuxième partie du support, ce qui est d'autant plus avantageux qu'un tel traitement thermique peut rendre plus difficile une connexion par soudure de la première partie du support au reste du système de transmission.

En variante ou en complément, un revêtement permettant d'atténuer les vibrations du support lors d'un choc exercé par la masse sur ce support peut être déposé sur la deuxième partie du support, une fois la première partie découpée. Le revêtement peut être du Deltaflon™ commercialisé par la société Fluorotechnique^{(R)}. Ce revêtement peut être appliqué sur le support par projection, par électrolyse ou par phase vapeur. Un tel revêtement met en oeuvre du PTFE.

Lors du découpage de la première partie, la ou les première pistes de roulement peuvent déjà avoir été ménagées dans la deuxième partie du support.

En variante, lors du découpage de la première partie, la ou les premières pistes de roulement n'ont pas encore été ménagées dans la deuxième partie du support.

Au sens de la présente demande :
- « axialement » signifie « parallèlement à l'axe de rotation du support »,
- « radialement » signifie « le long d'un axe appartenant à un plan orthogonal à l'axe de rotation du support et coupant cet axe de rotation du support»,
- « angulairement » ou « circonférentiellement » signifie « autour de l'axe de rotation du support »,
- « orthoradialement » signifie « perpendiculairement à une direction radiale »,
- « solidaire » signifie « rigidement couplé », et
- la position de repos d'un corps pendulaire est celle dans laquelle ce corps pendulaire est centrifugé sans être soumis à des oscillations de torsion provenant des acyclismes du moteur thermique.

La première partie du support peut présenter sur son pourtour radialement extérieur une alternance de portions pleines et de portions vides, la deuxième partie du support présentant sur son pourtour radialement intérieur une alternance de portions pleines et de portions vides. Lorsque l'on se déplace le long d'un diamètre donné on peut ainsi d'une part rencontrer une alternance de portions pleines et de portions vides de la première partie du support, et d'autre part une alternance de portions pleines et de portions vides de la deuxième partie du support.

Chaque portion pleine, respectivement vide, de la première partie du support peut avoir une forme complémentaire de celle d'une portion vide, respectivement pleine, de la deuxième partie du support. Cette complémentarité de forme peut résulter du découpage de la première partie dans la deuxième partie du support.

Chaque portion pleine de la première partie du support a par exemple, dans un plan orthogonal à l'axe de rotation, une forme de pétale.

L'ensemble des portions pleines de la première partie du support forme ici la zone radialement extérieure de la première partie du support. Chaque portion pleine de la première partie du support s'étend par exemple radialement vers l'extérieur depuis un anneau formant la zone radialement intérieure de la première partie du support. La connexion du support au reste du système de transmission peut se faire via cette zone radialement intérieure de la première partie du support.

La première partie du support peut être axialement décalée par rapport à la deuxième partie du support. La première partie du support peut majoritairement s'étendre radialement à l'intérieur de la deuxième partie du support.

Chaque portion pleine, respectivement vide, de la première partie du support peut être axialement en regard de tout ou partie d'une portion pleine, respectivement vide, de la deuxième partie du support. Autrement dit, lorsque l'on relie de façon rigide la première partie et la deuxième partie du support, par exemple une fois le ou les traitements mentionnés ci-dessus effectués, on positionne la première et la deuxième partie de manière à ce que les portions pleines de la première partie du support soient axialement en regard des portions pleines de la deuxième partie du support.

La liaison rigide entre la première et la deuxième partie du support peut mettre en oeuvre des organes de couplage, chaque organe de couplage étant reçu dans une zone d'une portion pleine de la première partie du support et dans une zone d'une portion pleine de la deuxième partie du support qui sont axialement en regard. Ces organes de couplage peuvent être des rivets s'étendant axialement. Chaque portion pleine de la première partie du support peut être reliée de façon rigide à une portion pleine de la deuxième partie du support via au moins un organe de couplage, notamment au moins un rivet.

En variante, la liaison rigide entre la première partie et la deuxième partie du support met en oeuvre un emmanchement en force. Les portions pleines de la première partie du support peuvent avoir des dimensions différentes l'une par rapport à l'autre. Ainsi, une portion pleine de la première partie du support d'un premier type présente par exemple une dimension radialement intérieure faible et une dimension radialement extérieure élevée tandis qu'une portion pleine de la première partie du support d'un deuxième type présente une dimension radialement intérieure élevée et une dimension radialement extérieure faible. La liaison rigide s'effectue alors en emmanchant en force :
- les portions pleines de la première partie du support du premier type dans des portions vides de la deuxième partie du support résultant du découpage de portion pleines de la première partie du support du deuxième type, et
- les portions pleines de la première partie du support du deuxième type dans des portions vides de la deuxième partie du support résultant du découpage de portions pleines de la première partie du support du premier type.

L'emmanchement en force se fait ainsi pour chaque portion pleine de la première partie du support du premier type au niveau de sa dimension radialement extérieure tandis que l'emmanchement en force se fait pour chaque portion pleine de la première partie du support du deuxième type au niveau de sa dimension radialement intérieure.

L'invention a encore pour objet, selon un autre de ses aspects, un dispositif d'amortissement pendulaire, comprenant :
- un support tel que défini précédemment, et
- au moins un corps pendulaire mobile par rapport au support, le déplacement par rapport au support de ce corps pendulaire étant guidé par au moins un organe de roulement coopérant d'une part avec la première piste de roulement et d'autre part avec au moins une deuxième piste de roulement solidaire du corps pendulaire.

Le déplacement du corps pendulaire par rapport au support peut être guidé par deux organes de roulement auquel cas le dispositif d'amortissement est qualifié de « bifilaire ».

Chaque organe de roulement coopère par exemple avec au moins une première piste de roulement solidaire du support et avec au moins une deuxième piste de roulement solidaire du corps pendulaire. Chaque organe de roulement coopère par exemple avec la ou les pistes de roulement solidaires du support et avec la ou les pistes de roulement solidaires du corps pendulaire uniquement via sa surface extérieure.

Chaque organe de roulement est par exemple un rouleau de section circulaire dans un plan perpendiculaire à l'axe de rotation du support. Ce rouleau peut comprendre plusieurs portions cylindriques successives de rayon différent. Les extrémités axiales du rouleau peuvent être dépourvues de rebord annulaire fin. Le rouleau est par exemple réalisé en acier. Le rouleau peut être creux ou plein.

Dans tout ce qui précède, le dispositif comprend par exemple un nombre de corps pendulaires compris entre deux et huit, notamment trois, quatre, cinq ou six corps pendulaires. Tous ces corps pendulaires peuvent se succéder circonférentiellement. Le dispositif peut ainsi comprendre une pluralité de plans perpendiculaires à l'axe de rotation dans chacun desquels tous les corps pendulaires sont disposés.

Dans tout ce qui précède la forme des premières et des deuxièmes pistes de roulement précitées peut être telle que chaque corps pendulaire soit uniquement déplacé par rapport au support en translation autour d'un axe fictif parallèle à l'axe de rotation du support.

En variante, la forme des pistes de roulement peut être telle que chaque corps pendulaire soit déplacé par rapport au support à la fois :
- en translation autour d'un axe fictif parallèle à l'axe de rotation du support et,
- également en rotation autour du centre de gravité de ladite masse pendulaire, un tel mouvement étant encore appelé « mouvement combiné » et divulgué par exemple dans la demande DE 10 2011 086 532.

Selon un exemple de mise en oeuvre de l'invention, le corps pendulaire peut comprendre une première masse pendulaire disposée axialement d'un premier côté de la deuxième partie du support et une deuxième masse pendulaire disposée axialement d'un deuxième côté de la deuxième partie du support, la première et la deuxième masse pendulaire étant solidarisées entre elles par au moins un organe de liaison.

Selon cet exemple de mise en oeuvre de l'invention, le dispositif d'amortissement pendulaire peut comprendre un système d'atténuation du bruit se produisant lors d'un choc du corps pendulaire sur le support, ce système d'atténuation étant disposé axialement de chaque côté de la deuxième partie du support et serrant axialement cette dernière.

Le système d'atténuation peut permettre de prendre en compte les bruits et/ou vibrations du support non souhaitables se produisant notamment lors du démarrage ou lors de l'arrêt du moteur thermique du véhicule. Le démarrage et l'arrêt du moteur thermique correspondent en effet à de faibles régimes qui peuvent entraîner une désynchronisation des corps pendulaires par rapport au support, de sorte que ces corps pendulaires peuvent chuter radialement et venir frapper contre le support. Un tel choc peut alors occasionner ces vibrations et/ou ces bruits non souhaitables.

Le système d'atténuation du bruit peut comprendre un premier élément disposé axialement d'un premier côté de la deuxième partie du support et un deuxième élément disposé axialement d'un deuxième côté de cette deuxième partie du support.

Ce premier et ce deuxième élément peuvent être des pièces distinctes solidarisées au support, par exemple à la deuxième partie du support, notamment par fixation sur des zones de la deuxième partie du support disposées radialement au-delà des portions pleines de cette deuxième partie. Cette fixation s'effectue par exemple par vissage, rivetage, soudure à ultra-sons, thermo-soudure...

Chaque élément du système d'atténuation peut présenter sur son pourtour radialement intérieur une alternance de portions pleines et de portions vides. Il existe par exemple une portion vide du premier élément dudit système qui est axialement en regard d'une portion pleine du deuxième élément dudit système, tout en étant axialement en regard d'une portion vide de la première partie du support et d'une portion vide de la deuxième partie du support. Ces deux éléments du système d'atténuation peuvent être fixés entre eux via ces deux portions pleines à travers l'espace axial vide ménagé par les portions vides du support

En variante, il peut exister des zones de chaque élément du système d'atténuation du bruit qui sont axialement en regard d'une portion pleine de la première partie du support et d'une portion pleine de la deuxième partie du support, et la fixation du système d'atténuation du bruit au support peut se faire via des vis ou rivets reçus dans ces zones et ces portions pleines. Cette fixation peut encore mettre en oeuvre d'autres moyens.

En variante encore, le premier et le deuxième élément du système d'atténuation du bruit peuvent être une seule et même pièce surmoulée sur la deuxième partie du support.

La deuxième partie du support peut porter au moins une pièce d'interposition axiale disposée axialement en regard de la première masse pendulaire ou de la deuxième masse pendulaire, cette pièce d'interposition axiale étant notamment un revêtement déposé sur le support.

Une telle pièce d'interposition peut ainsi limiter le déplacement axial de la masse pendulaire par rapport au support, évitant ainsi les chocs axiaux entre lesdites pièces, et ainsi une usure et des bruits non souhaités, notamment lorsque le support et/ou la masse pendulaire sont en métal.

Lorsque la pièce d'interposition est un revêtement, ce revêtement est par exemple tel que mentionné précédemment.

En variante, la pièce d'interposition axiale peut être un patin porté par le support. Ce patin peut être en plastique et être accroché sur le support via une ou plusieurs pattes de fixation montées dans un ou plusieurs trous du support.

Les pièces d'interposition peuvent être positionnées sur le support de manière à ce qu'il y ait toujours au moins une pièce d'interposition dont au moins une partie est axialement interposée entre une masse pendulaire et le support, quelles que soient les positions relatives du support et de ladite masse.

Selon cet exemple de mise en oeuvre, chaque corps pendulaire peut comprendre au moins un organe d'amortissement de butée, apte à venir simultanément en contact avec le corps pendulaire et le support dans des positions relatives du corps pendulaire par rapport au support. Ces positions relatives sont par exemple :
- la position à l'issue d'un déplacement dans le sens trigonométrique de ce corps pendulaire depuis la position de repos pour filtrer une oscillation de torsion, et/ou
- la position à l'issue d'un déplacement dans le sens non-trigonométrique de ce corps pendulaire depuis la position de repos pour filtrer une oscillation de torsion, et/ou
- la position à l'issue d'une chute radiale de ce corps pendulaire, notamment lors du démarrage ou de l'arrêt du moteur du véhicule.

Chaque organe d'amortissement de butée peut être dédié à un organe de liaison du corps pendulaire et porté par ce dernier. Chaque organe d'amortissement de butée peut présenter des propriétés élastiques permettant l'amortissement des chocs liés au contact entre le support et le corps pendulaire. Cet amortissement est alors permis par une compression de l'organe d'amortissement de butée, ce dernier étant par exemple en élastomère ou en caoutchouc.

Le système d'atténuation du bruit peut être différent d'un organe d'amortissement de butée, auquel cas le système d'atténuation du bruit ne vient pas amortir la venue en butée du corps pendulaire contre le support en venant simultanément en contact avec le corps pendulaire et le support.

Selon une première réalisation préférée, l'organe de roulement coopère avec une seule première piste de roulement et avec une seule deuxième piste de roulement, et cette deuxième piste de roulement est définie par l'organe de liaison du corps pendulaire. Une portion du contour de cet organe de liaison définit par exemple la deuxième piste de roulement. En variante, un revêtement peut être déposé sur cette portion du contour de l'organe de liaison pour former la deuxième piste de roulement. Un tel organe de liaison est par exemple emmanché en force via chacune de ses extrémités axiales dans une ouverture ménagée dans une des masses pendulaires. En variante, l'organe de liaison peut être soudé ou vissé ou riveté via ses extrémités axiales sur chaque masse pendulaire.

Selon la première réalisation préférée, le déplacement de chaque corps pendulaire par rapport au support peut être guidé par au moins deux organes de roulement, notamment exactement deux organes de roulement. Deux organes de liaison coopérant chacun avec un organe de roulement peuvent être prévus.

Chaque organe de roulement peut alors être uniquement sollicité en compression entre les première et deuxième pistes de roulement mentionnées ci-dessus. Ces première et deuxième pistes de roulement coopérant avec un même organe de roulement peuvent être au moins en partie radialement en regard, c'est-à-dire qu'il existe des plans perpendiculaires à l'axe de rotation dans lesquels ces pistes de roulement s'étendent toutes les deux.

Selon la première réalisation préférée, chaque organe de roulement peut être reçu dans une fenêtre du support recevant déjà un organe de liaison et ne recevant aucun autre organe de roulement. Cette fenêtre est par exemple définie par un contour fermé dont une portion définit la première piste de roulement solidaire du support qui coopère avec cet organe de roulement.

Selon une deuxième réalisation préférée, l'organe de roulement coopère d'une part avec une seule première piste de roulement solidaire du support, et d'autre part avec deux deuxièmes pistes de roulement solidaires du corps pendulaire. Chaque masse pendulaire présente alors une ouverture dont une partie du contour définit une de ces deuxièmes pistes de roulement.

Selon cette deuxième réalisation préférée, chaque organe de liaison regroupe par exemple plusieurs rivets, et cet organe de liaison est reçu dans une fenêtre du support, tandis que l'organe de roulement est reçu dans une ouverture du support, distincte d'une fenêtre recevant un organe de liaison.

Selon cette deuxième réalisation préférée, deux organes de roulement peuvent guider le déplacement du corps pendulaire par rapport au support, et chaque organe de roulement coopère avec une première piste de roulement dédiée à cet organe de roulement et avec deux deuxièmes pistes de roulement dédiées à cet organe de roulement.

Selon cette deuxième réalisation préférée, chaque organe de roulement peut alors comprendre successivement axialement:
- une portion disposée dans une ouverture de la première masse pendulaire et coopérant avec la deuxième piste de roulement formée par une partie du contour de cette ouverture,
- une portion disposée dans une ouverture du support et coopérant avec la première piste de roulement formée par une partie du contour de cette ouverture, et
- une portion disposée dans une ouverture de la deuxième masse pendulaire et coopérant avec la deuxième piste de roulement formée par une partie du contour de cette ouverture.

Selon ce premier exemple de mise en oeuvre, il existe un unique support guidant via sa deuxième partie le déplacement des corps pendulaires.

Selon un deuxième exemple de mise en oeuvre, le déplacement de chaque corps pendulaire peut être guidé par deux supports, chacun étant tel que mentionné ci-dessus. Ces deux supports sont alors axialement décalés et solidaires. Dans ce cas, le corps pendulaire peut ne comprendre qu'une seule masse pendulaire disposée axialement entre les deux supports, ou le cas échéant plusieurs masses pendulaires solidarisées entre elles et disposées axialement entre les deux supports.

Selon ce deuxième exemple de mise en oeuvre de l'invention, chaque support peut porter un système d'atténuation du bruit se produisant lors d'un choc du corps pendulaire sur ce support, ce système d'atténuation étant disposé axialement de chaque côté du support et serrant axialement ce dernier. En variante, le système d'atténuation du bruit associé à chaque support n'est disposé axialement que du côté de ce support qui est en regard du corps pendulaire

L'invention a encore pour objet, selon un autre de ses aspects, un composant pour système de transmission d'un véhicule automobile, le composant étant notamment un double volant amortisseur, un convertisseur de couple hydrodynamique, un volant solidaire du vilebrequin, ou un disque de friction d'embrayage, ou un composant de système de transmission hybride, ou un double embrayage à sec ou humide, ou un simple embrayage humide, ce composant comprenant un dispositif d'amortissement pendulaire tel que défini ci-dessus.

Le support du dispositif d'amortissement pendulaire peut alors être l'un parmi :
- un voile du composant,
- une rondelle de guidage du composant,
- une rondelle de phasage du composant, ou
- un support distinct dudit voile, de ladite rondelle de guidage et de ladite rondelle de phasage.

Dans le cas où le dispositif est intégré à un volant solidaire du vilebrequin, le support peut être solidaire de ce volant.

Le composant est notamment un disque de friction d'embrayage. Dans un tel cas, le support peut être connecté au moyeu du disque de friction. La première partie du support est par exemple fixée, notamment soudée sur ce moyeu.

L'invention a encore pour objet, selon un autre de ses aspects, un procédé de réalisation d'un support pour dispositif d'amortissement pendulaire, comprenant les étapes suivantes :
- découper la zone centrale d'une tôle afin de former une première partie de support apte à être reliée à un composant de système de transmission de véhicule, le restant de la tôle formant une deuxième partie de support présentant au moins une première piste de roulement apte à coopérer avec un organe de roulement pour guider le déplacement d'un corps pendulaire, et
- relier rigidement la première partie et la deuxième partie.

Le procédé peut comprendre l'étape selon laquelle on fait subir à la deuxième partie, après l'étape de découpage et avant l'étape de liaison rigide à la première partie, un traitement de durcissement, par exemple une carbonitruration ou une nitruration.

Tout ou partie de ce qui a été mentionné en rapport avec l'aspect précédent de l'invention s'applique encore à cet autre aspect.

L'invention pourra être mieux comprise à la lecture de la description qui va suivre d'un exemple non limitatif de mise en oeuvre de celle-ci et à l'examen du dessin annexé sur lequel :
- la figure 1 représente en éclaté et en partie un composant de système de transmission avec un dispositif d'amortissement pendulaire, et
- la figure 2 représente le composant de la figure 1 lorsqu'il est assemblé

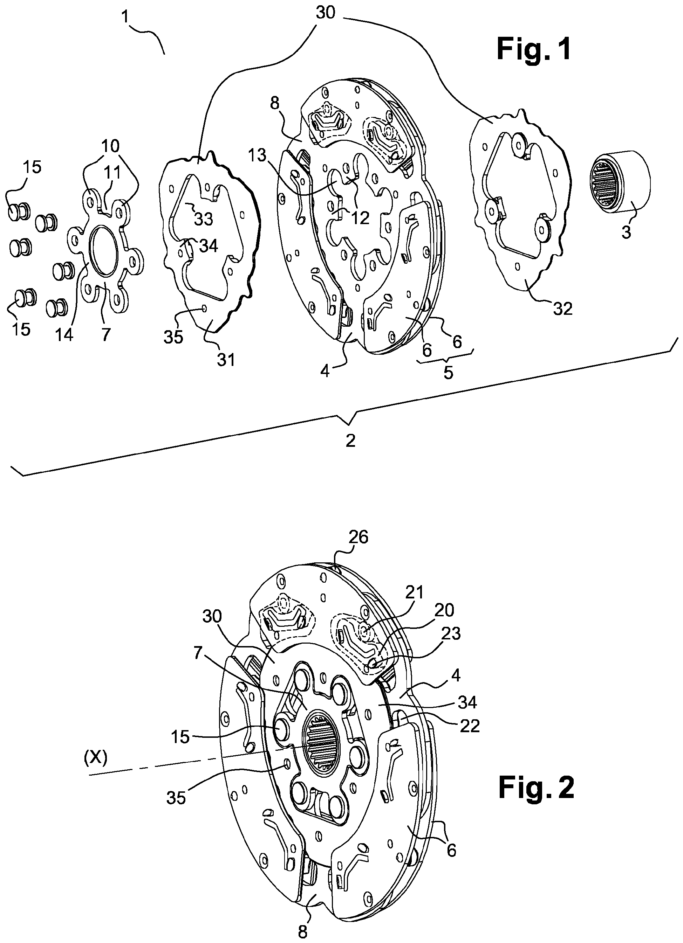

On a représenté sur la figure 1 un composant 1 de système de transmission comprenant un dispositif d'amortissement pendulaire 2 selon un exemple de mise en oeuvre de l'invention.

Ce composant 1 est ici un disque de friction d'embrayage, seul le moyeu 3 étant ici représenté. Ce composant 1 est par exemple associé à un moteur thermique notamment à deux, trois ou quatre cylindres.

Le dispositif d'amortissement pendulaire 2 comprend dans l'exemple considéré:
- un support 4 apte à se déplacer en rotation autour d'un axe X, et
- une pluralité de corps pendulaires 5 mobiles par rapport au support 4.

Dans l'exemple considéré, trois corps pendulaires 5 sont prévus, étant répartis de façon uniforme sur le pourtour de l'axe X.

On constate sur les figures 1 et 2 que le support 4 comprend ici deux parties distinctes 7 et 8.

La première partie 7 s'étend majoritairement radialement à l'intérieur de la deuxième partie 8 et cette première partie 7 sert à connecter physiquement le dispositif d'amortissement pendulaire 2 au moyeu 3, notamment par soudure.

La deuxième partie 8 sert à guider le déplacement des corps pendulaires 5, comme on le verra par la suite.

La première partie 7 est ici obtenue par découpage de la zone centrale de la deuxième partie du support 8.

Comme on peut le voir sur la figure 1, la première partie 7 du support 4 présente dans l'exemple décrit sur son pourtour radialement extérieur une alternance de portions pleines 10 et de portions vides 11.

Similairement, la deuxième partie 8 du support 4 présente sur son pourtour radialement intérieur une alternance de portions pleines 12 et de portions vides 13.

Du fait du découpage réalisé, chaque portion pleine 10 de la première partie 7 du support a une forme complémentaire de la forme de chaque portion vide 13 de la deuxième partie 8 du support 4, et chaque portion pleine 12 de la deuxième partie 8 du support 2 a une forme complémentaire de la forme de chaque portion vide 11 de la première partie 7 du support 4. On constate ainsi que chaque portion pleine 10 a la forme d'un pétale, s'étendant radialement vers l'extérieur depuis un anneau 14 fixé sur le moyeu 3.

Comme on peut le voir sur la figure 2, à l'état assemblé, chaque portion pleine 10 de la première partie 7 du support 4 est axialement en regard d'une portion pleine 12 de la deuxième partie 8 du support 4. Similairement, chaque portion vide 11 de la première partie 7 du support 4 est axialement en regard de d'une portion vide 13 de la deuxième partie 8 du support 4.

Chaque portion pleine 10 et 12 présente ici un trou traversant et le positionnement de la première partie 7 et de la deuxième partie 8 du support 4 permet d'aligner axialement ces deux trous, afin qu'une vis ou un rivet 15 formant un organe de couplage soit reçu à travers ces deux trous.

Dans l'exemple considéré, la deuxième partie 8 du support 4 présente globalement une forme d'anneau comportant deux côtés opposés qui sont ici des faces planes.

Comme on peut le voir sur les figures 1 et 2, chaque corps pendulaire 5 comprend dans l'exemple considéré :
- deux masses pendulaires 6, chaque masse pendulaire 6 s'étendant axialement en regard d'un côté de la deuxième partie 7 du support 4, et
- deux organes de liaison 20 solidarisant les deux masses pendulaires 6.

Les organes de liaison 20, encore appelés « entretoises », sont dans l'exemple considéré décalés angulairement.

Sur les figures 1 et 2, le dispositif d'amortissement pendulaire 2 est au repos, c'est-à-dire qu'il ne filtre pas les oscillations de torsion transmises par la chaîne de propulsion du fait des acyclismes du moteur thermique.

Dans l'exemple des figures, chaque extrémité d'un organe de liaison 20 est soudée sur une masse pendulaire 6. Dans des variantes, chacune de ces extrémités pourrait être emmanchée en force dans une ouverture ménagée dans une des masses pendulaires 6 du corps pendulaire 5, de manière à solidariser entre elles ces deux masses pendulaires 6.

Chaque organe de liaison 20 s'étend en partie dans une fenêtre 22 ménagée dans la deuxième partie 7 du support 4. Dans l'exemple considéré, la fenêtre 22 définit un espace vide à l'intérieur du support, cette fenêtre étant délimitée par un contour fermé.

Le dispositif 2 comprend encore dans l'exemple considéré des organes de roulement 21 guidant le déplacement des corps pendulaires 5 par rapport au support 4. Les organes de roulement sont par exemple des rouleaux.

Dans l'exemple décrit, le mouvement par rapport au support 4 de chaque corps pendulaire 5 est guidé par deux organes de roulement 21, chacun d'entre eux coopérant dans l'exemple des figures avec l'un des organes de liaison 20 du corps pendulaire 5.

Chaque organe de roulement coopère ici avec une seule première piste de roulement solidaire du support 4, et avec une seule deuxième piste de roulement solidaire du corps pendulaire 5 pour guider le déplacement du corps pendulaire 5.

Dans l'exemple considéré, chaque deuxième piste de roulement est formée par une portion du bord radialement extérieur d'un organe de liaison 20.

Chaque première piste de roulement est définie par une partie du contour d'une fenêtre 22.

Chaque première piste de roulement est ainsi disposée radialement en regard d'une deuxième piste de roulement, de sorte qu'une même surface de roulement d'un organe de roulement 21 roule alternativement sur la première piste de roulement et sur la deuxième piste de roulement. La surface de roulement de l'organe de roulement 21 est ici un cylindre de rayon constant.

Comme on peut le voir sur les figures 1 et 2, des organes d'amortissement de butée du corps pendulaire 5 contre le support 4 sont prévus. Des premiers organes d'amortissement de butée 23 sont portés par le corps pendulaire, chaque organe de liaison 20 étant associé à un premier organe d'amortissement de butée 23. Ces premiers organes d'amortissement de butée 23 sont ici configurés pour s'interposer entre l'organe de liaison associé 20 et le bord radialement intérieur de la fenêtre 22 recevant cet organe de liaison 20. Des deuxièmes organes d'amortissement de butée 26 sont prévus, étant également portés par le corps pendulaire 5 et configurés pour venir en appui contre le bord radialement extérieur de la deuxième partie 8 du support 4 pour des positions radiales basses de ce corps pendulaire 5.

Comme on peut encore le voir sur les figures 1 et 2, le composant 1 comprend encore, dans l'exemple considéré, un système d'atténuation 30 du bruit se produisant lors d'un choc du corps pendulaire 5 sur le support 4. Ce système d'atténuation 30 est ici disposé de chaque côté de la deuxième partie 8 du support 4 et serre axialement cette dernière.

Le système d'atténuation 30 comprend ici un premier élément 31 disposé axialement d'un premier côté de la deuxième partie 8 du support 4 et un deuxième élément 32 disposé axialement d'un deuxième côté de cette deuxième partie 8.

Ce premier 31 et ce deuxième 32 élément sont ici des pièces distinctes solidarisées à la deuxième partie 8 du support 4, cette solidarisation mettant notamment en oeuvre un vissage ou un rivetage à chaud de rivets en plastique.

Comme on peut le voir sur les figures 1 et 2, chaque élément 31 et 32 du système d'atténuation 30 présente sur son pourtour radialement intérieur une alternance de portions vides 33 et de portions pleines 34. On constate sur la figure 2 que chaque portion pleine 34 du premier élément 31 est axialement en regard d'une portion pleine 34 du deuxième élément 32, tout en étant axialement en regard d'une portion vide 11 de la première partie 7 du support 4 et d'une portion vide 13 de la deuxième partie 8 du support 4. Ces portions pleines 34 ont chacune un trou 35, et ces deux trous sont alignés pour recevoir une vis ou un rivet disposé axialement dans les portions vides 11 et 13 de la première et de la deuxième partie du support 4.
L'invention n'est pas limitée à l'exemple qui vient d'être décrit.

## Revendications

1. Support (4) pour dispositif d'amortissement pendulaire (2), comprenant :
- une première partie (7) apte à être reliée à un composant (1) d'un système de transmission de véhicule automobile, et
- une deuxième partie (8) dans laquelle est ménagée au moins une première piste de roulement apte à coopérer avec un organe de roulement (21) pour guider le déplacement d'un corps pendulaire (5),
la première partie (7) et la deuxième partie (8) étant rigidement reliées entre elles et la première partie (7) étant obtenue par découpage de la zone centrale de la deuxième partie (8).

2. Support selon la revendication 1, la première partie (7) du support (4) présentant sur son pourtour radialement extérieur une alternance de portions pleines (10) et de portions vides (11), la deuxième partie (8) du support (4) présentant sur son pourtour radialement intérieur une alternance de portions pleines (12) et de portions vides (13).

3. Support selon la revendication 2, chaque portion pleine (10), respectivement vide (11), de la première partie (7) du support ayant une forme complémentaire de celle d'une portion vide (13), respectivement pleine (12), de la deuxième partie (8) du support (4).

4. Support selon la revendication 2 ou 3, chaque portion pleine (10), respectivement vide (11), de la première partie (7) du support (4) étant axialement en regard de tout ou partie d'une portion pleine (12), respectivement vide (13), de la deuxième partie (8) du support (4).

5. Support selon la revendication 4, la liaison rigide mettant en oeuvre des organes de couplage (15), chaque organe de couplage (15) étant reçu dans une zone d'une portion pleine (10) de la première partie (7) du support (2) et dans une zone d'une portion pleine (12) de la deuxième partie (8) du support (4), lesdites zones étant axialement en regard.

6. Dispositif d'amortissement pendulaire (2), comprenant :
- un support (4) selon l'une quelconque des revendications précédentes, et
- au moins un corps pendulaire (5) mobile par rapport au support (4), le déplacement par rapport au support (4) de ce corps pendulaire (5) étant guidé par au moins un organe de roulement (21) coopérant d'une part avec la première piste de roulement et d'autre part avec au moins une deuxième piste de roulement solidaire du corps pendulaire (5).

7. Dispositif d'amortissement selon la revendication 6, le corps pendulaire (5) comprenant une première masse pendulaire (6) disposée axialement d'un premier côté de la deuxième partie (8) du support (4) et une deuxième masse pendulaire (6) disposée axialement d'un deuxième côté de la deuxième partie (8) du support (4), la première et la deuxième masses pendulaires (6) étant solidarisées entre elles par au moins un organe de liaison (20).

8. Dispositif selon la revendication 6 ou 7, comprenant un système d'atténuation (30) du bruit se produisant lors d'un choc du corps pendulaire (5) sur le support (4), ledit système (30) étant disposé axialement de chaque côté de la deuxième partie (8) du support (4) et serrant axialement cette dernière.

9. Dispositif selon la revendication 8, le système d'atténuation (30) comprenant un premier élément (31) disposé axialement d'un premier côté de la deuxième partie (8) du support (4) et un deuxième élément (32) disposé axialement d'un deuxième côté de la deuxième partie (8) du support (4), le premier élément (31) et le deuxième élément (32) étant des pièces distinctes solidarisées au support (4).

10. Dispositif selon la revendication, 8 ou 9, le système d'atténuation (30) du bruit étant différent d'un organe d'amortissement de butée venant simultanément en contact avec le corps pendulaire (3) et le support (2) pour amortir la venue en butée du corps pendulaire (3) contre le support (2).

11. Disque de friction pour embrayage (1) comprenant un dispositif d'amortissement pendulaire (2) selon l'une quelconque des revendications 6 à 10.
